# EUROPÄISCHE PATENTSCHRIFT

(11) **EP 3 083 854 B1**
(45) Veröffentlichungstag und Bekanntmachung des Hinweises auf die Patenterteilung: **15.08.2018**
(21) Anmeldenummer: 14821073.5
(22) Anmeldetag: 18.12.2014
(51) Int. Cl.: C09D 179/08, C10M 169/04, C10M 173/02, C10M 177/00, F16C 33/20

(54) **LÖSUNGSMITTELFREIER POLYAMIDIMID GLEITLACK AUF WASSERBASIS**
SOLVENT-FREE, WATER-BASED POLYAMIDE-IMIDE LUBRICATING LACQUER
VERNIS DE GLISSEMENT CONTENANT DU POLYAMIDIMIDE, EXEMPT DE SOLVANTS ET À BASE D'EAU

(30) Priorität: 20.12.2013 DE 102013021949
(43) Veröffentlichungstag der Anmeldung: 26.10.2016
(73) Patentinhaber: Klüber Lubrication München SE & Co. KG, 81379 München (DE)
(72) Erfinder: GRAFMÜLLER, Andrea, 80337 München (DE); PFEINTNER, Armin, 83714 Miesbach (DE); THAMERUS, Heike, 81477 München (DE); SEEMEYER, Stefan, 82515 Wolfsratshausen (DE)
(74) Vertreter: Hering, Hartmut
(86) Internationale Anmeldenummer: PCT/EP2014/003422
(87) Internationale Veröffentlichungsnummer: WO 2015/090597

(56) Entgegenhaltungen:
- EP-A1- 1 541 651
- WO-A1-00/53677
- DE-A1-102012 207 819
- DATABASE WPI Week 201059 Thomson Scientific, London, GB; AN 2010-K12412 XP002737258, -& CN 101 768 500 A (SHANDONG JIULONG POLYMER CO LTD) 7. Juli 2010 (2010-07-07)

## Beschreibung

Die Erfindung betriff einen von organischen Lösungsmitteln freien Polyamidimid-(PAI)-Gleitlack, nachfolgend als lösungsmittelfreier PAI-Gleitlack bezeichnet, auf Wasserbasis und dessen Verwendung für die Beschichtung von metallischen Werkstoffen, Compositmaterialien, Aluminium, Aluminiumlegierungen, Stahl-, Edelstahl und Gusswerkstoffe, Buntmetallen sowie Kunststoffen und Polymeren, gemäß Patentansprüchen 1 bis 5. Allgemein werden Lacksysteme als Gleitlacke bezeichnet, wenn sie Festschmierstoffe oder schmieraktive Substanzen enthalten. Es ist bekannt Gleitlackbeschichtungen mit Polyamidimid (PAI) als Bindemittel zu verwenden. So beschreiben die EP 1 717 469 B1 und die DE 10 2008 055 194 A1 ein Gleitlacksystem auf PAI-Basis, die für die Beschichtung von Gleitlagern verwendet werden. Es ist außerdem bekannt, technische Bauteile mit PAI-Gleitlacken zu versehen.

Die bekannten Gleitlacke auf Polyamidimid-Basis enthalten aber immer organische Lösungsmittel. Gängige Lösungsmittel für PAI-Bindemittel sind N-Methyl-2-Pyrrolidon (NMP) sowie N-Ethyl-2-Pyrrolidon (NEP). Das Polyamidimid liegt mit diesen Lösungsmitteln als echte Lösung vor. Als weitere Lösungsmittel kommen auch hochpolare Lösungsmittel wie etwa *N,N*-Dimethylformamid (DMF), *N,N*-Dimetyhlacetamid (DMAc) oder auch *N*-Acetyl-Morpholin in Frage. Die PAI-Lösungen sind in diesen Lösungsmitteln gut handhabbar. Die bisher verwendeten und oben genannten Lösungsmittel haben jedoch den entscheidenden Nachteil, dass sie alle CMR-Substanzen, d.h. (Cancerogen/Mutagen/Reprotoxisch)-Substanzen sind. Der Umgang mit diesen Substanzen ist deshalb zum einen sehr bedenklich und wird zum anderen auch (bald) nicht mehr möglich sein. Es besteht also ein Bedarf an PAI-Lacksystemen, die ohne die CMR-Lösungsmittel auskommen.

Ein PAI-Lacksystem, das ohne CMR-Lösungsmittel auskommt, ist in der EP 2 428 539 A1 beschrieben. Als Lösungsmittel für das PAI-Harz wird *γ*-Butyrolacton (kurz: GBL) verwendet und ein cyclisches Keton dient in der Lackformulierung als Co-Lösungsmittel. Auch wenn GBL keine CMR-Substanz ist, so ist GBL doch als Drogenvorstufe zu "Liquid Ecstasy" (= *γ*-Hydroxybuttersäure) bekannt und unterliegt der freiwilligen Selbstkontrolle. Dadurch wird die Handhabung dieses Lösungsmittels deutlich erschwert, da ein Missbrauch als Partydroge bzw. als Drogenvorstufe nur schwer auszuschließen ist. Inwieweit der Gesetzgeber die Handhabung in Zukunft noch verschärft, ist zur Zeit nicht absehbar.

Die DE 600 31 387 T2 offenbart ein wässriges PAI-System bzw. die Vorstufe, ein Polyamid-Amid, das auf dem Substrat bei thermischer Aushärtung PAI bildet. Der PAI-Überzug, der als Festschmierstoff PTFE enthält, wird unter Einbrennbedingungen mit sehr langen Vortrocknungszeiten (80°C für mindestens 1 Stunde) und einer Einbrennzeit von mehreren Stunden bei 200 bis 300 °C, beispielsweise 300 °C für 3 Stunden, aufgetragen. Diese Zeiten und Temperaturen sind in der Praxis für Beschichtungen von technischen Bauteilen mit sehr hoher . Stückzahl, wie beispielsweise Gleitlagern oder Klimakolbenkompressoren, nicht anwendbar. Soll zum Beispiel ein Bauteil aus Aluminium mit Gleitlack beschichtet werden, sind am besten Temperaturen bis 180 °C anzuwenden, in der Praxis höchstens jedoch bis 230 °C, da sich das Bauteil durch die thermische Belastung sonst zu sehr verformt.

Die CN 101 768 500 A offenbart einen lösungsmittelfreien Polyamindimidgleitlack auf Wasserbasis der des weiteren PTFE als wässriges Latex, MoS₂-Pulver, Graphitpulver, Metalloxidpulver und Carbon-Nanotubes enthält.

Die EP 1 541 651 A1 betrifft wässrige Formulierungen enthaltend Polyamid-Amidsäuren und mit diesen vernetzbare Moleküle, die als Gleitlacke verwendet werden. Während des Beschichtungsverfahrens wird aus den Polyamid-Amidsäuren auf dem Substrat PAA- und/oder PAI-Einheiten ausgebildet.

Die DE 10 2012 207 819 A1 beschreibt Gleitlacke für Triebwerksmodule, die auf wässrigen PAI-Bindemitteln basieren, denen Festschmierstoffe und weitere Additive zugesetzt werden. Es werden jedoch keine Angaben hinsichtlich der konkreten Zusammensetzung gemacht, d.h. es werden keine Mengen für die einzelnen Bestandteile der Zusammensetzung angegeben.

Das Ziel der vorliegenden Erfindung besteht deshalb darin, einen PAI-Gleitlack auf Wasserbasis bereitzustellen, der zum einen ohne die oben genannten CMR-Lösungsmittel auskommt und zum anderen eine gute Oberflächengüte bietet und für tribologische Anwendungen angewendet wird.

Dieses Ziel wird dadurch erreicht, dass das PAI-Bindemittel mit einem Co-Vernetzungsmittel bzw. einem Co-Bindemittel versetzt und als Lösungsmittel Wasser eingesetzt wird. Dieses Co-Vernetzungsmittel verhindert während des Aushärtungsprozesses die Blasenbildung auf dem zu beschichtenden Bauteil, damit wird eine Gleitlackschicht mit sehr guter Oberflächengüte erhalten, die tribologischen Ansprüchen gerecht wird. Die Verwendung des Co-Vernetzers verbessert die Haftung auf dem Bauteil.

Erfindungsgemäß werden die Co-Vernetzungsmittel bzw. Co-Bindemittel ausgewählt aus der Gruppe bestehend aus Isocyanten, blockierten Isocyanaten, Nanopartikeln, Epoxiden und Epoxidharzen.

Der erfindungsgemäße Gleitlack findet Anwendung auf metallischen Oberflächen.

Mit dem erfindungsgemäßen Gleitlack, dem ein Co-Vernetzungsmittel zugesetzt wird, kann sowohl die Einbrenntemperatur gesenkt werden als auch die Blasenbildung deutlich verringert bzw. ganz vermieden werden.

Mit dem erfindungsgemäßen Gleitlack ist es gelungen, mit einer Einbrenntemperatur von 180 bis 230 °C eine sehr gute Haftung (Gitterschnitt Gt = 0) sowie Verschleißbeständigkeit auf Metallsubstraten zu erreichen.

Mit Co-Vernetzungsmittel kann die Blasenbildung während des Aushärteprozesses (nahezu) verhindert werden und somit eine Gleitlackschicht mit sehr guter Oberflächengüte erreicht werden, die tribologischen Ansprüchen gerecht wird.

Ferner konnte auf einem Stift-Scheibe Prüfstand die Eignung für tribologische Anwendungen nachgewiesen werden. Der Test am Stift-Scheibe-Tribometer wurde unter nachfolgenden Bedingungen durchgeführt: Raumtemperatur; Schichtdicke Gleitlack: 15 µm auf Stahl, sandgestrahlt, Punktberührung, Umdrehungsgeschwindigkeit 0,16 m/s.

Der erfindungsgemäße PTFE-haltiger Gleitlack basierend auf in Wasser gelöstem PAI mit Co-Vernetzungsmittel, erzielte vergleichbare Leistungsdaten, wie ein lösungsmittelbasierter PAI-Gleitlack, z.B. Klüber-Gleitpan JF 158 A/B. Bei einer Last von 50 N erzielte der Gleitlack eine Laufzeit von 120 Minuten, ohne dass das Abbruchkriterium, 50 % Impedanz, erreicht wurde. Bei einer Last von 70 N erfolgte ein Ausfall, also das Erreichen einer Impedanz von 50 %, nach ca. 10 Minuten. Der ermittelte durchschnittliche Reibwert lag bei 0,12.

Nachfolgend wird der Aufbau des erfindungsgemäßen Gleitlacks beschrieben. Herstellung des wasserbasierten, lösungsmittelfreien PAI-Bindemitttels

Polyamid-Imid-Pulver wird unter Zuhilfenahme einer aminischen Base wie Triethanolamin oder *N,N*-Di-methylethanolamin in der Wärme bei ca. 80 °C gelöst. Die erhaltene Lösung wird filtriert, um noch ungelöstes Pulver zu entfernen. Es werden wässrige Lösungen von Polyamid-Imid oder der Vorstufe, Polyamid-Amid mit einem Festkörperanteil von ca. 10 % erhalten.

Herstellung Lack:
In die wässrige PAI- bzw. PAA-Lösung werden unter Zuhilfenahme handelsüblicher Netz- und Dispergieradditive mit einem Dissolver oder Ultraturrax Festschmierstoffe, Füllstoffe und Pigmente eindispergiert. Bei Bedarf können auch Entschäumer, Korrosionsschutzmittel und Verlaufsmittel zugegeben werden. Auch weitere dem Fachmann bekannte Additive können zur Lackformulierung verwendet werden.

Der vordispergierte, wässrige Gleitlack wird bei Bedarf über eine Perlmühle abgerieben.

Vor der Beschichtung werden ein oder mehrere Co-Vernetzungsmittel eingerührt oder eindispergiert, bis eine homogene Mischung erreicht ist.

Je nach Art des Co-Vernetzungsmittels kann dieser/können diese auch gleich nach Fertigstellung des Lackes eingerührt werden, so dass man nur einen 1-Komponenten-Lack hat. Die Co-Vernetzungsmittel können aber auch, je nach Art des Vernetzungsmittels, bereits vor dem Abreiben mit einer Perlmühle der Lackformulierung zugegeben werden

Der erfindungsgemäße Gleitlack weist folgende Zusammensetzung auf:

| | |
|---|---|
| 1 bis 20 Vol.-% | Festschmierstoffe |
| 0,1 bis 20 Vol.-% | Additive, Füllstoffe und Pigmente |
| 2 bis 30 Vol.-% | Bindemittel |
| 0,5 bis 15 Vol.-% | Co-Vernetzungsmittel bzw. Co-Bindemittel |

Rest zu 100 Vol.-% Wasser

Der erfindungsgemäße Gleitlack weist bevorzugt folgende Zusammensetzung auf:

| | |
|---|---|
| 1,5 bis 13 Vol.-% | Festschmierstoffe |
| 0,1 bis 10 Vol.-% | Additive, Füllstoffe und Pigmente |
| 5 bis 25 Vol.-% | Bindemittel |
| 0,5 bis 10 Vol.-% | Co-Vernetzungsmittel bzw. Co-Bindemittel |

Rest zu 100 Vol.-% Wasser

Als Festschmierstoffe eignen sich die für Gleitlacke üblicherweise verwendeten organischen sowie anorganischen Festschmierstoffe wie Wachse, modifizierte Wachse, polymere Festschmierstoffe wie Polyimide, Polyamide oder Polyamidimd, PTFE, polyfluorierte Verbindungen, Graphit, MoS₂, Bornitrid (hexagonal), Zinn(IV)-Sulfid, Wolframsulfid, allgemein: Metallsulfide, Calciumphosphate, Silikate und Schichtsilikate, wie etwas Talk oder Glimmer. Die Aufzählung schmieraktiver Substanzen betrachtet die bekanntesten und am weitesten verbreiteten Festschmierstoffe.

Als Additive werden Zusatzstoffe für wasserbasierende Lacke verwendet wie beispielsweise Netzmittel, Dispergieradditive, Entschäumer, Entlüfter, Verlaufsmittel, Korrosionsinhibitoren und ähnliches verwendet. Allgemein sind die Additive sowohl an die im Lack verwendeten Substanzen, wie Festschmierstoffe und Füllstoffe, als auch dem Anwendungsgebiet, beispielsweise dem zu beschichtenden Untergrund, anzupassen. Ebenfalls können nach Bedarf rheologische Additive und Anti-Absetzmittel eingesetzt werden.

Als Füllstoffe eignen sich die für Lacke üblichen Füller wie beispielsweise Silikate und Phosphate, Ruß, sowie verschiedene Metalloxide. Allgemein/Prinzipiell sind verwendbare Additive, Füllstoffe sowie Pigmente z.B. genannt in z.B. Lackformulierung und Lackrezeptur, Bodo Müller/Ulrich Poth, Vincentz Verlag, 2. Auflage, 2005 oder Lehrbuch der Lacktechnologie, Brock/Groteklaes/Mischke, Vincentz Verlag, 3. Auflage, 2009 genannt.

Als Verschleißschutzadditive können verschiedene Metallsalzphosphate oder -silikate sowie deren Mischungen eingesetzt werden. Es eignen sich jedoch auch Metalloxide, beispielsweise Eisenoxide in verschiedenen Oxidationsstufen, sowie Mischoxide als Verschleißschutz. Ebenfalls können verschiedene Nanopartikel bzw. nanoskalige Partikel, die bis in einen Größenbereich von mehreren µm gehen können, als Verschleißschutz für die erfindungsgemäßen Gleitlacke eingesetzt werden.

Als Verschleißschutzadditive eignen sich auch Hartkeramiken wie (Aluminium-) Korund, Bornitrid (kubisch), Titancarbid, Siliziumcarbid und Siliziumnitrid.

Als mögliche Farbgeber eignen sich neben einigen zum Teil unter Verschleißschutzadditive genannten Substanzen alle möglichen (Farb-) Pigmente sowie Farbstoffe.

Das Bindemittel ist, wie bereits beschrieben, ein in Wasser gelöstes Polyamid-Imid bzw. dessen Vorstufe Polyamid-Amid.

Als Co-Vernetzungsmittel bzw. Co-Bindemittel eignen sich:
- aromatische und aliphatische Isocyanate sowie deren Mischungen;
- aromatische und aliphatische blockierte Isocyanate; die Isocyanate können beispielsweise mit ε-Caprotactam, 1,2,4-Triazol, Dimethylpyrazol, Diethylmalonester, Amintypen wie z.B. Diisoprpylamin, 2-Butanonoxim, Phenoltypen blockiert sein;
- funktionalisierte Nanopartikel, bevorzugt sind SiO₂-Nanopartikel, deren Oberflächen modifiziert, so dass sie Alkohol-gruppen (auch z.B. Diol oder Polyol), Amin-, Epoxid-, blockierte Isocyanat-, Isocyanat-, Thiol- oder Mercapto, Urethangruppen tragen; auch können nano-TiO₂, nano-Al₂O₃, nano-WO₂, nano-ZrO₂ eingesetzt werden. Die Teilchenform dieser Nanopartikel ist beliebig, bevorzugt weisen die Nanopartikel jedoch eine kugelförmige Gestalt auf. Die Nanopartikel sind kristallin oder amorph.
- Epoxide bzw. Epoxidharze bzw. -Bindemittel; diese können wasserlöslich sein, sowie wässrige Dispersionen von Epoxiden und Epoxidharzen oder auch lösungsmittelbasierte Systeme sein, die in den wässrigen Gleitlack vor Gebrauch eindispergiert werden. Das Epoxid(system) kann dabei ein molekular sein (z.B. Bisphenol-Typ, epoxid-funktionalisiert) oder auch ein epoxidhaltiges/epoxidfunktionalisiertes Oligomer oder ein Polymer (als Lösung bzw. wässrige Dispersion).

Der erfindungsgemäße Gleitlack findet Anwendung auf allen metallischen Werkstoffen, sowie metallischen Bauteilen, Verbundmaterialien, Aluminium, Aluminiumlegierungen, Stahl-, Edelstahl- und Gusswerkstoffen. Bevorzugt wird der erfindungsgemäße Gleitlack auf Eisen-/Stahl-werkstoffen und Aluminiumlegierungen verwendet. Es ist auch möglich, den erfindungsgemäßen Gleitlack in Kombinationen von Metallen, Legierungen usw. mit Kunststoffen zu verwenden. Ein Einsatz auf Kunststoffen/Polymeren ist ebenfalls möglich, vor allem wegen der relativ geringen Einbrenntemperaturen von 180 °C. Geeignet ist der Gleitlack auch auf Sputterschichten/Flammspritzschichten. Die Oberflächen können auch auf gängige Arten wie Sandstrahlen, Phosphatieren, Beizen, Silanisieren oder ähnliches vorbehandelt sein.

Die Aufbringung des Gleitlacks erfolgt mittels bekannter Applikationsverfahren, wie Spritzverfahren, auch elektrostatisch unterstützt, Rakeln, Dispensing, Pinseln, Tauchen/Tauchzentrifugieren, Trommeln, Aufrollen, Druckverfahren wie etwa Sieb- oder Tampondruck.

### Beispiel

| | |
|---|---|
| 2,7 Vol.-% | PTFE, Mikropulver |
| 1,2 Vol.-% | Additive (Netz und Dispergiermittel) |
| 6,5 Vol.-% | Bindemittel (PAI in Wasser, Base N,N-Dimethyl-Aminoethanol) |
| 3,5 Vol.-% | Co-Vernetzungsmittel: niedermolekulares Epoxidharz mit geringer Löslichkeit in Wasser). |

Rest zu 100 Vol.-% VE-Wasser.

Der so hergestellte Gleitlack wurde mittels des oben beschriebenen Stift-Scheibe-Test getestet. Einbrennbedingungen: mindestens 30 Minuten bei 80 °C, Einbrennen 180 °C für 30 Minuten.

Mit dem erfindungsgemäßen Gleitlack wurde ein gut vernetzter Film trotz geringerer Einbrenntemperatur von 180°C erhalten, der keine Blasenbildung aufwies und tribologischen Anforderungen und Tests Stand hielt. Damit ist der erfindungsgemäße Gleitlack geeignet, auch auf Oberflächen, die keine zu hohen Temperaturen vertragen, angewendet zu werden.

Zum Vergleich wurde ein PAI-Gleitlack auf Wasserbasis ohne Co-Vernetzungsmittel bzw. Co-Bindemittel auf eine Metalloberfläche aufgetragen und bei einer Temperatur von 230°C eingebrannt. Dieser eingebrannte Film war nicht vernetzt, d.h. er war nicht kratzfest, haftete demzufolge auch nicht auf der Oberfläche und wies viele Bläschen auf.

## Patentansprüche

1. Lösungsmittelfreier Polyamidimid-Gleitlack auf Wasserbasis bestehend aus
2 bis 13 Vol.-% Festschmierstoffe,
0,05 bis 10 Vol.-% Additive, Füllstoffe und Pigmente,
5 bis 25 Vol.-% Polyamidimid oder Polyamidamid,
0,5 bis 10 Vol.-% Co-Vernetzungsmittel und/oder Co-Bindemittel, wobei das Co-Vernetzungsmittel und/oder Co-Bindemittel ausgewählt werden aus der Gruppe bestehend aus aromatischen und aliphatischen Isocyanten, sowie deren Mischungen, aromatisch und aliphatisch blockierten Isocyananten, funktionalisierten Nanopartikeln, Epoxiden, Epoxidharzen und Epoxidbindemitteln, und
Rest zu 100 Vol.-% Wasser.

2. Lösungsmittelfreier Polyamidimid-Gleitlack auf Wasserbasis nach Anspruch 1, bei dem die Festschmierstoffe ausgewählt werden aus der Gruppe bestehend aus organischen und anorganischen Festschmierstoffen, polymere Festschmierstoffe, polyfluorierte Verbindungen, Graphit, Metallsulfide, Calciumphosphate, Silikate und Schichtsilikate.

3. Lösungsmittelfreier Polyamidimid-Gleitlack auf Wasserbasis nach Anspruch 1, bei dem die Additive ausgewählt werden aus der Gruppe bestehend aus Netzmitteln, Dispergieradditive, Entschäumer, Entlüfter, Verlaufsmittel, Korrosionsinhibitoren.

4. Lösungsmittelfreier Polyamidimid-Gleitlack auf Wasserbasis nach Anspruch 1, bei dem die Füllstoffe ausgewählt werden aus der Gruppe bestehend aus Silikaten, Phosphaten, Ruß, Metalloxide.

5. Verwendung des lösungsmittelfreien Polyamidimid-Gleitlacks auf Wasserbasis nach einem der vorherigen Ansprüche zum Beschichten von metallischen Werkstoffen, Compositmaterialien, Aluminium, Aluminiumlegierungen, Stahl-, Edelstahl- und Gusswerkstoffe, Buntmetallen sowie Kunststoffen und Polymeren.

## Claims

1. Solvent-free, water-based polyamide-imide lubricating lacquer consisting of
2 to 13 vol.-% solid lubricants,
0.05 to 10 vol.-% additives, filler material and pigments,
5 to 25 vol.-% polyamide-imide or polyamide-amide,
0.5 to 10 vol.-% co-cross linking agent and/or co-binding agent, wherein the co-cross linking agent and/or co-binding agent are selected from the group consisting of aromatic and aliphatic isocyanates, as well as a mixture thereof, aromatic and aliphatic blocked isocyanantes, nano-particles, epoxides, epoxide resins and epoxide binding agents, and
the balance to 100 vol.-% being water.

2. Solvent-free, water-based polyamide-imide lubricating lacquer according to claim 1, wherein the solid lubricants are selected from the group consisting of organic and inorganic solid lubricants, polymeric solid lubricants, polyfluorinated compounds, graphite, metallic sulphides, calcium phosphates, silicates and layered silicates.

3. Solvent-free, water-based polyamide-imide lubricating lacquer according to claim 1, wherein the additives are selected from the group consisting of wetting agents, dispersing agents, anti-foaming agents, degassing agents, flow-control agents and corrosion inhibitors.

4. Solvent-free, water-based polyamide-imide lubricating lacquer according to claim 1, wherein the filler material is selected from the group consisting of silicates, phosphates, carbon black, metallic oxides.

5. Use of the solvent-free, water-based polyamide-imide lubricating lacquer according to one of the proceeding claims for coating metallic basic materials, composite materials, aluminium, aluminium alloys, steel-, stainless steel and cast iron materials, non-ferrous metals as well as plastic materials and polymers.

## Revendications

1. Vernis de glissement contenant du polyamidimide, exempt de solvants et à base d'eau constitué de
2 à 13 % en volume de lubrifiants solides,
0,05 à 10% en volume d'additifs, d'agents de charge et de pigments,
5 à 25% en volume de polyamidimide ou de polyamidamide,
0,5 à 10% en volume d'agents mouillants et/ou liants auxiliaires, l'agent mouillant auxiliaire et/ou le liant auxiliaire étant sélectionnés par le groupe constitué d'isocyanates aromatiques et aliphatiques, ainsi que de leurs mélanges, d'isocyanates aromatiques et alphatiques bloqués, de nanoparticules fonctionnalisées, d'époxydes, de résines époxy et de liants époxy, et
le reste comportant jusqu'à 100% en volume d'eau.

2. Vernis de glissement contenant du polyamidimide, exempt de solvants et à base d'eau suivant la revendication 1, dans lequel les lubrifiants solides sont sélectionnés parmi le groupe constitué de lubrifiants organiques et inorganiques, des lubrifiants solides polymères, des composés polyfluorés, du graphite, des sulfures métalliques, des phosphates de calcium, des silicates et des silicates lamellaires.

3. Vernis de glissement contenant du polyamidimide, exempt de solvants et à base d'eau suivant la revendication 1, dans lequel les additifs sont sélectionnés parmi le groupe constitué d'agents mouillants, d'additifs dispersants, d'agents anti-mousse, d'agents de dégazage, d'agents d'écoulement, d'inhibiteurs de corrosion.

4. Vernis de glissement contenant du polyamidimide, exempt de solvants et à base d'eau suivant la revendication 1, dans lequel les agents de charge sont sélectionnés parmi le groupe constitué de silicates, phosphates, noir de carbone et oxydes de métaux.

5. Utilisation du vernis de glissement contenant du polyamidimide, exempt de solvants et à base d'eau suivant une des revendications précédentes pour revêtir des matériaux métalliques, des matériaux composites, de l'aluminium, des alliages d'aluminium, des matériaux en acier, acier inoxydable et de coulée, des métaux non ferreux, ainsi que des matières artificielles et des polymères.
